# EUROPÄISCHE PATENTANMELDUNG

(11) **EP 4 465 117 A1**
(43) Veröffentlichungstag der Anmeldung: **20.11.2024**
(21) Anmeldenummer: 24174732.8
(22) Anmeldetag: 08.05.2024
(51) Int. Cl.: G02F 1/035, G02F 1/21, G02F 1/225

(54) **MODULATORANORDNUNGEN**

(30) Priorität: 17.05.2023 DE 102023113133
(71) Anmelder: Fraunhofer-Gesellschaft zur Förderung der angewandten Forschung e.V., 80686 München (DE)
(72) Erfinder: RUNGE, Dr. Patrick, 14193 Berlin (DE)
(74) Vertreter: Maikowski & Ninnemann Patentanwälte Partnerschaft mbB

(57) **Zusammenfassung**

Die Erfindung betrifft eine Modulatoranordnung (100), mit einem optischen Dünnfilm-Lithiumniobat-Mach-Zehnder-Modulator (1) mit einem auf einem Substrat (10) angeordneten ersten und einem zweiten Wellenleiterarm (11, 12), wobei der erste und der zweite Wellenleiterarm (11, 12) jeweils einen aus Lithiumniobat gebildeten Bereich (111, 121) aufweisen; einer Elektrodenanordnung (2) zum Erzeugen eines elektrischen Feldes, das zumindest abschnittsweise auf den ersten und zweiten Wellenleiterarm (11, 12) einwirkt, wobei die Elektrodenanordnung (2) eine erste und eine zweite Signalleitung (S1, S2) sowie eine erste und zweite Masseleitung (M1, M2) umfasst, wobei die erste Signalleitung (S1) zumindest abschnittsweise oberhalb des ersten Wellenleiterarms (11) verläuft, so dass die erste Signalleitung (S1) - in einer Richtung senkrecht zu dem Substrat (10) betrachtet - mit dem ersten Wellenleiterarm (11) fluchtet, wobei die zweite Masseleitung (M2) zumindest abschnittsweise oberhalb des zweiten Wellenleiterarms (12) verläuft, so dass zweite Masseleitung (M2) - in einer Richtung senkrecht zu dem Substrat (10) betrachtet - mit dem zweiten Wellenleiterarm (12) fluchtet; einem differentiellen Treiber (3) zum Bereitstellen einer Spannung für den Mach-Zehnder-Modulator (1), wobei ein Signalausgang (AS1) des Treibers (3) mit der ersten Signalleitung (S1) und ein Masseausgang (AM2) mit der zweiten Masseleitung (M2) verbunden ist.

## Beschreibung

Die Erfindung betrifft eine Modulatoranordnung mit einem Dünnfilm-Lithiumniobat-Mach-Zehnder-Modulator gemäß Anspruch 1 sowie einer Modulatoranordnung mit einem Dünnfilm-Lithiumniobat-Mach-Zehnder-Modulator Mach-Zehnder-Modulator gemäß Anspruch 8.

Mach-Zehnder (MZ)-Modulatoren auf Basis von Lithiumniobat haben in den letzten Jahren aufgrund der Dünnfilm-Lithiumniobat-Technologie (thin film lithium niobate - TFLN) eine neue Dynamik erfahren, da derartige Modulatoren eine hohe 3 dB-Bandbreite und eine geringe Schaltspannung ("V_π") ermöglichen. Typischerweise werden TFLN-MZ-Modulatoren über Masse-Signal-Masse-Kontakte ("Ground-Signal-Ground-Interface") getrieben. Ein solches Ground-Signal-Ground (GSG)-Interface wird verwendet, da es ein natives Interface für die übliche Push-Pull-Konfiguration der Beschaltung der MZ-Modulatoren darstellt. Mit anderen Worten wird ein MZ-Modulator klassischerweise über eine "single-ended"-Elektronik getrieben. Bei einem Einsatz der MZ-Modulatoren in Kommunikationsnetzen ist das Treiben mit single-ended-Treibern jedoch ineffizient.

Das der Erfindung zugrunde liegende Problem besteht daher darin, die MZ-Modulatoren möglichst energieeffizient zu betreiben zu können.

Dieses Problem wird durch die Bereitstellung der Modulatoranordnung mit den Merkmalen des Anspruchs 1 sowie der Modulatoranordnung mit den Merkmalen des Anspruchs 8 gelöst. Weiterbildungen der Erfindung sind in den abhängigen Ansprüchen angegeben.

Danach wird eine Modulatoranordnung bereitgestellt, mit
- einem optischen Dünnfilm-Lithiumniobat-Mach-Zehnder-Modulator mit einem auf einem Substrat angeordneten ersten und einem zweiten Wellenleiterarm, wobei
- der erste und der zweite Wellenleiterarm jeweils einen aus Lithiumniobat gebildeten Bereich aufweisen;
- einer Elektrodenanordnung zum Erzeugen eines elektrischen Feldes, das zumindest abschnittsweise auf den ersten und zweiten Wellenleiterarm einwirkt, wobei
- die Elektrodenanordnung eine erste und eine zweite Signalleitung sowie eine erste und zweite Masseleitung umfasst, wobei
- die erste Signalleitung zumindest abschnittsweise oberhalb des ersten Wellenleiterarms verläuft, so dass die erste Signalleitung - in einer Richtung senkrecht zu dem Substrat betrachtet - mit dem ersten Wellenleiterarm fluchtet, wobei
- die zweite Masseleitung zumindest abschnittsweise oberhalb des zweiten Wellenleiterarms verläuft, so dass zweite Masseleitung - in einer Richtung senkrecht zu dem Substrat betrachtet - mit dem zweiten Wellenleiterarm fluchtet;
- einem differentiellen Treiber zum Bereitstellen einer Spannung für den Mach-Zehnder-Modulator, wobei
- ein Signalausgang des Treibers mit der ersten Signalleitung und ein Masseausgang mit der zweiten Masseleitung verbunden ist.

Mit der beanspruchten Elektrodenanordnung lässt sich beispielsweise eine reduzierte Leistungsaufnahme bei hoher Bandbreite erzielen.

Der aus Lithiumniobat gebildete Bereich des MZ-Modulators bildet zum Beispiel einen Wellenleiterkern des ersten und/oder zweiten Wellenleiterarms aus. Denkbar ist auch, dass der aus Lithiumniobat gebildete Bereich an einen Wellenleiterkern des ersten und/oder zweiten Wellenleiterarms angrenzt. Das Substrat besteht beispielsweise aus Silizium, wobei auf dem Substrat eine Schicht aus Siliziumdioxid angeordnet sein kann. Die Erfindung ist jedoch nicht auf eine bestimmte Ausgestaltung der optischen Schichten des Mach-Zehnder-Modulators beschränkt.

In einem Ausführungsbeispiel der Erfindung weist der aus Lithiumniobat gebildete Bereich mindestens eine Lithiumniobat-Schicht in z-cut-Orientierung auf.

Die zweite Signalleitung verläuft zum Beispiel in Draufsicht gesehen, d.h. in einer Richtung senkrecht zu den Wellenleiterarmen und parallel zu dem Substrat betrachtet, zumindest abschnittsweise zwischen der ersten Signalleitung und der zweiten Masseleitung. Darüber hinaus kann die erste Masseleitung - ebenfalls in einer Richtung senkrecht zu den Wellenleiterarmen und parallel zu dem Substrat betrachtet - zumindest abschnittsweise auf einer der zweiten Signalleitung abgewandten Seite der ersten Signalleitung verlaufen.

Beispielsweise sind die Signal- und Masseleitungen - in einer Richtung senkrecht zu den Wellenleiterarmen und parallel zu dem Substrat betrachtet - nebeneinander in der Reihenfolge erste Masseleitung, erste Signalleitung, zweite Signalleitung und zweite Masseleitung angeordnet, also nach Art einer GSSG-Konfiguration.

Der Treiber weist insbesondere einen weiteren (zweiten) Signalausgang auf, der mit der zweiten Signalleitung verbunden ist, und/oder der Treiber weist einen weiteren (zweiten) Masseausgang auf, der mit der ersten Masseleitung verbunden ist. Denkbar ist, dass die Ausgänge des Treibers nebeneinander in der Reihenfolge erster Masseausgang, erster Signalausgang, zweiter Signalausgang und zweiter Masseausgang angeordnet, d. h. in einer GSSG-Anordnung. Möglich ist, dass die Signalausgänge und/oder die Masseausgänge des Treibers jeweils eine Kontaktfläche aufweisen, die mit den entsprechenden Signalleitungen bzw. Masseleitungen des MZ-Modulators verbunden (zum Beispiel gebondet) sind. Denkbar ist insbesondere, dass die Signalausgänge und/oder die Masseausgänge des Treibers (beispielsweise die erwähnten Kontaktflächen) so angeordnet sind, dass sie jeweils einem Endabschnitt der jeweiligen Signalleitung bzw. Masseleitung des MZ-Modulators gegenüberliegen (insbesondere in einer Richtung entlang der Signalleitungen bzw. Masseleitungen betrachtet).

In einem zweiten Aspekt betrifft die Erfindung eine Modulatoranordnung, mit
- einem optischen Dünnfilm-Lithiumniobat-Mach-Zehnder-Modulator mit einem auf einem Substrat angeordneten ersten und einem zweiten Wellenleiterarm, wobei
- der erste und der zweite Wellenleiterarm jeweils einen aus Lithiumniobat gebildeten Bereich aufweisen, wobei der aus Lithiumniobat gebildete Bereich mindestens eine Lithiumniobat-Schicht in x-cut -Orientierung aufweist;
- einer Elektrodenanordnung zum Erzeugen eines elektrischen Feldes, das zumindest abschnittsweise auf den ersten und zweiten Wellenleiterarm einwirkt, wobei
- die Elektrodenanordnung eine erste und eine zweite Signalleitung sowie eine erste und zweite Masseleitung umfasst, wobei
- der erste Wellenleiterarm - in einer Richtung senkrecht zu den Wellenleiterarmen und parallel zu dem Substrat betrachtet - zwischen der ersten Masseleitung und der ersten Signalleitung verläuft, und wobei
- der zweite Wellenleiterarm - in einer Richtung senkrecht zu den Wellenleiterarmen und parallel zu dem Substrat betrachtet - zwischen der zweiten Masseleitung und der zweiten Signalleitung verläuft;
- einem differentiellen Treiber zum Erzeugen einer Spannung für den Mach-Zehnder-Modulator, wobei der Treiber aufweist:
- einen ersten Signalausgang, der mit der ersten Signalleitung verbunden ist,
- einen zweiten Signalausgang, der mit der zweiten Signalleitung verbunden ist,
- einen ersten Masseausgang, der mit der ersten Masseleitung verbunden ist, und
- einen zweiten Masseausgang, der mit der zweiten Masseleitung verbunden ist.

Beispielsweise sind die Signal- und Masseleitungen von oben gesehen, d. h. in einer Richtung senkrecht zu den Wellenleiterarmen und parallel zu dem Substrat betrachtet, nebeneinander in der Reihenfolge erste Masseleitung, erste Signalleitung, zweite Masseleitung und zweite Signalleitung angeordnet, also nach Art einer GSGS-Konfiguration. Entsprechend können die Ausgänge des Treibers nebeneinander in der Reihenfolge erster Masseausgang, erster Signalausgang, zweiter Masseausgang und zweiter Signalausgang angeordnet sein. Analog zu dem Treiber der Modulatoranordnung des ersten Erfindungsaspekts weisen die Ausgänge des Treibers insbesondere Kontaktflächen auf, über die jeweils eine Verbindung zu den entsprechenden Signal- bzw. den Masseleitungen des MZ-Modulators besteht.

Der Mach-Zehnder-Modulator der erfindungsgemäßen Modulatoranordnungen (gemäß dem ersten oder dem zweiten Aspekt) weist beispielsweise einen mit einem Eingangskoppler verbundenen Eingangswellenleiter auf. Der Eingangskoppler ist beispielsweise nach Art einer optischen Verzweigung (z. B. Y-Koppler), eines Richtkopplers oder eines MMI-(Multi Mode Interference)-Kopplers ausgebildet.

Denkbar ist darüber hinaus, dass der Eingangswellenleiter einen mit dem Eingangskoppler verbundenen ersten Abschnitt und einen zweiten Abschnitt, über den Licht in den Eingangswellenleiter einkoppelbar ist, umfasst, wobei der Eingangswellenleiter zwischen dem ersten und dem zweiten Abschnitt eine Krümmung besitzt. Der zweite Abschnitt des Eingangswellenleiters umfasst insbesondere ein Einkoppelende, zum Beispiel eine Stirnseite (Facette) des Eingangswellenleiters, über das Licht in den Eingangswellenleiter einkoppelbar ist. Beispielsweise handelt es sich bei der Krümmung um einen Halbkreis, so dass der gekrümmte Wellenleiterabschnitt den ersten Abschnitt des Eingangswellenleiters mit dem zweiten Abschnitt des Eingangswellenleiters nach Art einer 180°-Kurve verbindet. Das Licht tritt somit in einer Richtung in den Eingangskoppler ein, die der Einkoppelrichtung, mit der Licht in das Einkoppelende des Eingangswellenleiters einkoppelbar ist, entgegengesetzt ist.

Des Weiteren kann der Mach-Zehnder-Modulator mindestens einen mit den beiden Wellenleiterarmen verbundenen Ausgangskoppler umfassen, wobei sich der zweite Abschnitt des Eingangswellenleiters (insbesondere das erwähnte Einkoppelende des Eingangswellenleiters) zumindest teilweise auf einer den Wellenleiterarmen abgewandten Seite des Ausgangskopplers befindet.

Der differentielle Treiber der Modulatorenanordnungen ist jeweils insbesondere ausgebildet, die Signalleitungen mit gegenläufigen Signalen (gegenläufigen elektrischen Spannungen) zu beaufschlagen. Die gegenläufigen Signale müssen nicht zwingend identische Amplituden besitzen. Denkbar ist, dass der Treiber zwei Signalausgänge aufweist, über die der Treiber jeweils eine Wechselspannung bereitstellt, wobei die bereitgestellten Wechselspannungen entgegengesetzte (gegenläufige) Polarität besitzen. Der differentielle Treiber weist insbesondere einen entsprechend ausgebildeten Verstärker auf.

Die Erfindung wird im Folgenden anhand von Ausführungsbeispielen unter Bezugnahme auf die Figuren näher erläutert. Es zeigen:
- Figur 1: eine Modulatoranordnung gemäß einem ersten Ausführungsbeispiel der Erfindung;
- Figur 2: schematisch einen Teil eines Schnitts entlang A-A in Figur 1; und
- Figur 3: eine Modulatoranordnung gemäß einem zweiten Ausführungsbeispiel der Erfindung.

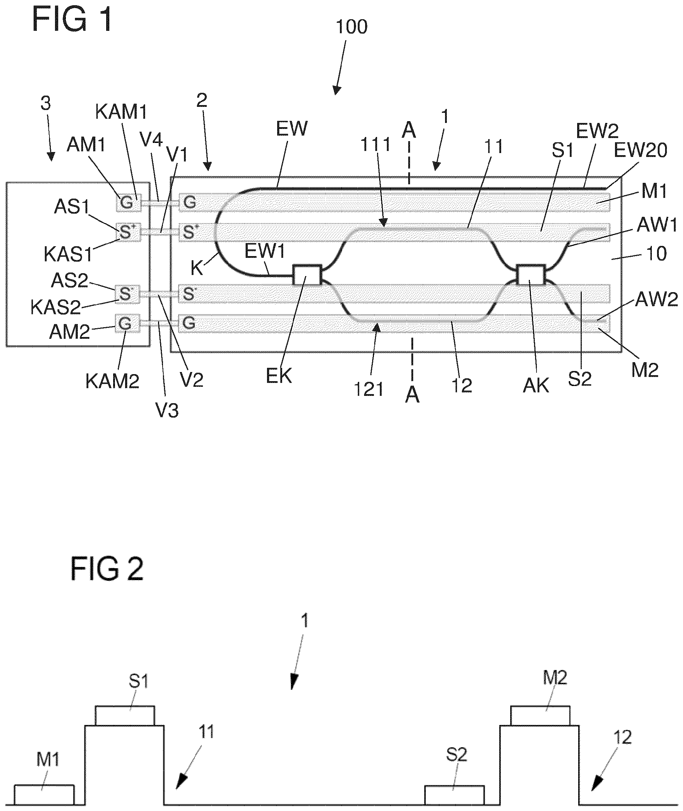

Die in Figur 1 dargestellte erfindungsgemäße Modulatoranordnung 100 umfasst einen Mach-Zehnder-Modulator 1 sowie eine Elektrodenanordnung 2 zur elektrischen Beschaltung des Mach-Zehnder-Modulators 1. Die Elektrodenanordnung 2 ist mit einem differentiellen Treiber 3 gekoppelt. Der Mach-Zehnder-Modulator 1 umfasst einen auf einem Substrat 10 angeordneten ersten und einen zweiten Wellenleiterarm 11, 12, wobei sich die Wellenleiterarme 11, 12 jeweils in an sich bekannter Weise zwischen einem Eingangskoppler EK und einem Ausgangskoppler AK des Mach-Zehnder-Modulators 1 erstrecken. Figur 1 zeigt die Modulatoranordnung in einer Ansicht von oben, d. h. in einer Draufsicht senkrecht zu dem Substrat 10. Die Wellenleiterarme 11, 12 müssen nicht unbedingt unmittelbar auf dem Substrat 10 angeordnet sein. Vielmehr kann der Mach-Zehnder-Modulator 1 mindestens eine auf dem Substrat angeordnete Zwischenschicht aufweisen.

Bei dem Mach-Zehnder-Modulator 1 handelt es sich um einen optischen Dünnfilm-Lithiumniobat-Mach-Zehnder-Modulator, wobei der erste und der zweite Wellenleiterarm 11, 12 jeweils einen aus Lithiumniobat gebildeten Bereich 111, 121 aufweisen. Wie oben bereits erwähnt, formt der aus Lithiumniobat gebildete Bereich 111, 121 zum Beispiel einen Kern des ersten und des zweiten Wellenleiterarms 11, 12 aus oder grenzt an den Kern an. Der aus Lithiumniobat gebildete Bereich 111, 121 besitzt insbesondere eine z-cut-Orientierung.

Die Elektrodenanordnung 2 dient zum Erzeugen eines elektrischen Feldes, das zumindest abschnittsweise auf den ersten und zweiten Wellenleiterarm 11, 12, insbesondere dessen Kern, einwirkt. Die Elektrodenanordnung 2 umfasst eine erste und eine zweite Signalleitung S1, S2 sowie eine erste und zweite Masseleitung M1, M2.

Die erste Signalleitung S1 verläuft zumindest abschnittsweise oberhalb des ersten Wellenleiterarms 11, so dass sie - in einer Richtung senkrecht zu dem Substrat 10 betrachtet - mit dem ersten Wellenleiterarm 11 fluchtet. Insbesondere verläuft die erste Signalleitung S1 parallel zu einem geraden Mittelabschnitt des ersten Wellenleiterarms 11. Des Weiteren erstreckt sich die erste Signalleitung S1 - sowohl in Richtung auf den Treiber 3 zu als auch in einer Richtung von dem Treiber 3 weg - über den Wellenleiterarm 11 hinaus.

Die zweite Masseleitung M2 verläuft zumindest abschnittsweise oberhalb des zweiten Wellenleiterarms 12, so dass sie - in einer Richtung senkrecht zu dem Substrat 10 betrachtet - mit dem zweiten Wellenleiterarm 12 fluchtet. Insbesondere erstreckt sich die zweite Masseleitung M2 parallel zu einem geraden Mittelabschnitt des zweiten Wellenleiters 12 und somit parallel zu der ersten Signalleitung S1. Analog zu der ersten Signalleitung S1 erstreckt sich auch die zweite Masseleitung 2 über die Wellenleiterarme 11, 12 hinaus, und zwar sowohl in Richtung auf den Treiber 3 zu als auch in entgegengesetzter Richtung.

Die zweite Signalleitung S2 erstreckt sich bezogen auf die Darstellung in Figur 1 in vertikaler Richtung gesehen, d. h. in einer Richtung senkrecht zu den Wellenleiterarmen 11, 12 und parallel zu dem Substrat 10 betrachtet, zumindest abschnittsweise zwischen der ersten Signalleitung S1 und der zweiten Masseleitung M2. Insbesondere ist die zweite Signalleitung S2 parallel zu der ersten Signalleitung S1. Die erste Masseleitung M1 verläuft auf einer der zweiten Signalleitung S2 abgewandten Seite der ersten Signalleitung S1, d. h. in Figur 1 oberhalb der ersten Signalleitung S1. Mit anderen Worten sind die Signal- und des in Figur 1 gezeigten Ausführungsbeispiels - in einer Richtung senkrecht zu den Wellenleiterarmen 11, 12, parallel zu dem Substrat 10 und in Figur 1 von oben nach unten betrachtet - nebeneinander in der Reihenfolge erste Masseleitung M1, erste Signalleitung S1, zweite Signalleitung S2 und zweite Masseleitung M2 angeordnet ("GSSG").

Der differentielle Treiber 3 besitzt zwei Signalausgänge AS1, AS2 sowie zwei Masseausgänge AM1, AM2. Der erste Signalausgang AS1 ist mit der ersten Signalleitung S1 und der zweite Signalausgang AS2 ist mit der zweiten Signalleitung S2 gekoppelt, wobei der Treiber 3 die erste und die zweite Signalleitung AS1, AS2 mit gegenläufigen Spannungen beaufschlagt. Die beiden Masseausgänge AM1, AM2 sind mit der ersten Masseleitung M1 bzw. mit der zweiten Masseleitung M2 verbunden.

Die Verbindung der Treiberausgänge AS1, AS2, AM1, AM2 mit den Signal- bzw. Masseleitungen S1, S2, M1, M2 erfolgt mittels Verbindungsleitungen V1-V4 (zum Beispiel in Form von Bonddrähten), wobei die Treiberausgänge AS1, AS2, AM1, AM2 jeweils eine Kontaktfläche KAS1, KAS2, KAM1, KAM2 umfassen oder mit einer derartigen Kontaktfläche verbunden sind. Die Kontaktflächen KAS1, KAS2, KAM1, KAM2 sind jeweils über eine der Verbindungsleitungen V1-V4 mit einem dem Treiber 3 zugewandten Endabschnitt der zugehörigen Signal- bzw. Masseleitung S1, S2, M1, M2 verbunden. Die Kontaktflächen KAS1, KAS2, KAM1, KAM2 sind in einer Reihenfolge angeordnet, die derjenigen der Signal- bzw. Masseleitungen S1, S2, M1, M2 entspricht (GSSG), so dass die Kontaktflächen KAS1, KAS2, KAM1, KAM2 jeweils dem Endabschnitt der zugehörigen Signal- bzw. Masseleitung S1, S2, M1, M2 gegenüberliegen (in Richtung der Signal- bzw. Masseleitungen S1, S2, M1, M2 betrachtet). Die Verbindungsleitungen V1-V4 können zumindest näherungsweise parallel zueinander verlaufen. Insbesondere überkreuzen sich die Verbindungsleitungen V1-V4 nicht.

Zur Einkopplung von Licht in den Mach-Zehnder-Modulator 1 umfasst dieser einen Eingangswellenleiter EW. Eine erster Abschnitt EW1 des Eingangswellenleiters EW ist mit dem Eingangskoppler EK verbunden. Bei dem Eingangskoppler EK handelt es sich bei beispielsweise um ein MMI. Ein zweiter Abschnitt EW2 des Eingangswellenleiters EW ist mit dem ersten Abschnitt EW1 über einen gekrümmten Abschnitt K verbunden. Der zweite Abschnitt EW2 weist ein Einkoppelende EW20 (zum Beispiel in Form einer Facette oder eines sonstigen optischen Elements) auf, über das Licht in den Eingangswellenleiter EW einkoppelbar ist. Der gekrümmte Abschnitt K verläuft nach Art einer 180°-Kurve, so dass Licht über das Einkoppelnde EW20 in einer Richtung in den Eingangswellenleiter EW einkoppelbar ist, die entgegengesetzt zu der Richtung verläuft, in der das Licht aus dem ersten Abschnitt EW1 in den Eingangskoppler EK eintritt.

Darüber hinaus umfasst der Mach-Zehnder-Modulator 1 einen Ausgangskoppler AK, der beispielsweise ebenfalls in Form eines MMIs ausgebildet ist. Mit dem Ausgangskoppler AK sind zwei Ausgangswellenleiter AW1, AW2 verbunden, die jeweils ein Auskoppelende aufweisen, über das Licht aus den Ausgangswellenleitern AW1, AW2 austritt. Die Auskoppelenden der Ausgangswellenleiter befinden sich zum Beispiel zumindest näherungsweise auf Höhe des Einkoppelendes EW20 des Eingangswellenleiters EW, d. h. die Auskoppelenden der Ausgangswellenleiter AW1, AW2 fluchten in vertikaler Richtung (senkrecht zu den Wellenleiterarmen 11, 12) mit dem Einkoppelende EW20.

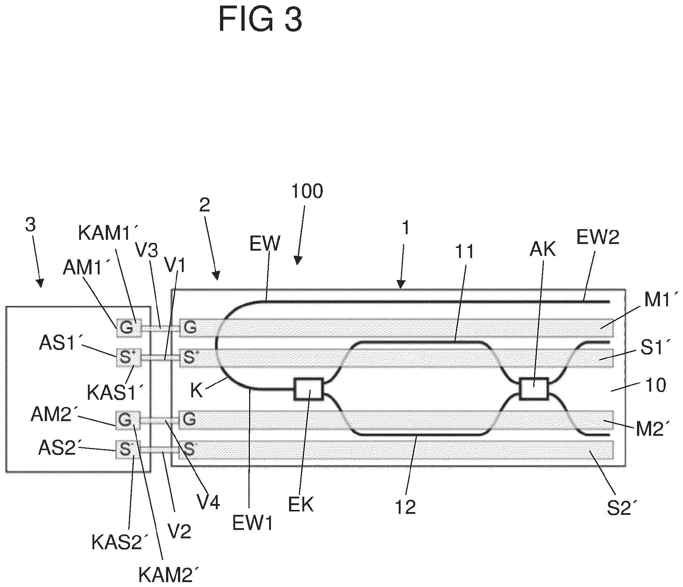

Gemäß der Darstellung in Figur 2 umfassen die Wellenleiterarme 11, 12 jeweils eine Rippe R1, R2, auf denen die erste Signalleitung bzw. die zweite Masseleitung S1, M2 angeordnet sind. Seitlich neben den Rippen R1, R2 befinden sich die erste Masseleitung M1 bzw. die zweite Signalleitung S2. In der Darstellung der Figur 2 ist die Breite der ersten Signalleitung S1 (zumindest ein unterer Abschnitt, mit dem sie die Rippe R1 kontaktiert) kleiner als die Breite der zugehörigen Rippe R1, und auch die Breite der zweiten Masseleitung M2 ist geringer als die Breite der zugehörigen Rippe R2 (zumindest ein unterer Abschnitt der Masseleitung M2, mit dem sie die Rippe R2 kontaktiert). Die Signalleitung S1 bzw. die Masseleitung M2 können jedoch auch zumindest näherungsweise die gleiche Breite wie die Wellenleiterrippen aufweisen. Denkbar ist auch, dass Signalleitung S1 und/oder die Masseleitung M2 zumindest abschnittsweise breiter als die Wellenleiterrippen oder zumindest breiter als die Wellenleiterkerne der jeweiligen Wellenleiterarme 11, 12 sind. Möglich ist auch, dass die Signalleitung S1 und/oder die Masseleitung M2 ein sich zu den Wellenleiterrippen hin verjüngendes, z.B. trapezförmiges Profil, aufweisen. Beispielsweise setzen solche Leitungen mit einer schmaleren Unterseite (deren Breite z.B. kleiner als die Breite der Wellenleiterrippe oder identisch zu der Breite der Wellenleiterrippe ist) auf der Wellenleiterrippe auf. Demnach können die Leitungen in Fig. 1 (analog in Fig. 3) schmaler oder breiter als die jeweilige Wellenleiterrippe sein oder eine zur Breite der Wellenleiterrippe identische Breite besitzen. Die in den Fig. 1 und 3 gezeigte Breite der Signal- und Masseleitungen ist nur beispielhaft.

Figur 3 zeigt eine erfindungsgemäße alternative Ausgestaltung der Elektrodenanordnung 2. Die optische Konfiguration des Mach-Zehnder-Modulator S1 entspricht derjenigen der Figur 1, insbesondere in Bezug auf die Wellenleiterarme 11, 12, den Eingangskoppler EK, den Ausgangskoppler AK, den Eingangswellenleiter EW sowie den Ausgangswellenleiter AW.

Der aus Lithiumniobat gebildete Bereich umfasst zudem mindestens eine Lithiumniobat-Schicht in x-cut-Orientierung.

Die Elektrodenanordnung 2 besitzt wiederum zwei Signalleitungen S1', S2' und zwei Masseleitungen M1', M2'. Die Leitungen S1', S2', M1', M2' sind jedoch jedoch anders angeordnet, nämlich derart, dass der erste Wellenleiterarm 11 - in einer Richtung senkrecht zu den Wellenleiterarmen 11, 12 und parallel zu dem Substrat 10 betrachtet - zwischen der ersten Masseleitung M1' und der ersten Signalleitung S1' verläuft. Zudem erstreckt sich der zweite Wellenleiterarm 12 zwischen der zweiten Masseleitung M2' und der zweiten Signalleitung S2'.

Analog zu Figur 1 sind die Signal- und Masseleitungen S1', S2', M1', M2' jeweils mit einer Kontaktfläche KAS1', KAS2', KAM1', KAM2' der Treiberausgänge AS1', AS2', AM1', AM2' verbunden. Die Verbindung erfolgt ebenfalls analog zu Figur 1 über Verbindungsleitungen V1-V4. Die Kontaktflächen KAS1', KAS2', KAM1', KAM2' liegen in vertikaler Richtung betrachtet (senkrecht zu den Signal- und Masseleitungen S1', S2', M1', M2') in der Reihenfolge AM1', AS1', AM2', AS2' (in Figur 3 von oben nach unten) nebeneinander und befinden sich dem jeweiligen, dem Treiber 3 zugewandten Endabschnitt der zugehörigen Signal- bzw. Masseleitung S1', S2', M1', M2' gegenüber, so dass die Verbindungsleitungen V1-V4 zumindest näherungsweise parallel zueinander verlaufen können, d.h. zumindest ein Überkreuzen benachbarter Verbindungsleitungen vermieden werden kann.

Die Wellenleiterarme 11, 12 können analog zur Figur 2 Rippen aufweisen, wobei jedoch im Ausführungsbeispiel der Figur 3 sämtliche Signal- bzw. Masseleitungen S1', S2', M1', M2' neben den Rippen, insbesondere seitlich an sie angrenzend, verlaufen. Wie oben bereits erwähnt, ist die Erfindung jedoch nicht auf eine bestimmte Konfiguration der optischen Bestandteile der Modulatoranordnung 100 beschränkt. Beispielsweise müssen die Wellenleiterarme 11, 12 nicht zwingend als Rippenwellenleiter ausgebildet sein.

## Patentansprüche

1. Modulatoranordnung (100), mit
- einem optischen Dünnfilm-Lithiumniobat-Mach-Zehnder-Modulator (1) mit einem auf einem Substrat (10) angeordneten ersten und einem zweiten Wellenleiterarm (11, 12), wobei
- der erste und der zweite Wellenleiterarm (11, 12) jeweils einen aus Lithiumniobat gebildeten Bereich (111, 121) aufweisen;
- einer Elektrodenanordnung (2) zum Erzeugen eines elektrischen Feldes, das zumindest abschnittsweise auf den ersten und zweiten Wellenleiterarm (11, 12) einwirkt, wobei
- die Elektrodenanordnung (2) eine erste und eine zweite Signalleitung (S1, S2) sowie eine erste und zweite Masseleitung (M1, M2) umfasst, wobei
- die erste Signalleitung (S1) zumindest abschnittsweise oberhalb des ersten Wellenleiterarms (11) verläuft, so dass die erste Signalleitung (S1) - in einer Richtung senkrecht zu dem Substrat (10) betrachtet - mit dem ersten Wellenleiterarm (11) fluchtet, wobei
- die zweite Masseleitung (M2) zumindest abschnittsweise oberhalb des zweiten Wellenleiterarms (12) verläuft, so dass zweite Masseleitung (M2) - in einer Richtung senkrecht zu dem Substrat (10) betrachtet - mit dem zweiten Wellenleiterarm (12) fluchtet;
- einem differentiellen Treiber (3) zum Bereitstellen einer Spannung für den Mach-Zehnder-Modulator (1), wobei
- ein Signalausgang (AS1) des Treibers (3) mit der ersten Signalleitung (S1) und ein Masseausgang (AM2) mit der zweiten Masseleitung (M2) verbunden ist.

2. Modulatoranordnung nach Anspruch 1, **dadurch gekennzeichnet, dass** der aus Lithiumniobat gebildete Bereich (111, 121) mindestens eine Lithiumniobat-Schicht in z-cut-Orientierung aufweist.

3. Modulatoranordnung nach Anspruch 1 oder 2, **dadurch gekennzeichnet, dass** die zweite Signalleitung (S2) - in einer Richtung senkrecht zu den Wellenleiterarmen (11, 12) und parallel zu dem Substrat (10) betrachtet - zumindest abschnittsweise zwischen der ersten Signalleitung (S1) und der zweiten Masseleitung (M2) verläuft.

4. Modulatoranordnung nach einem der vorhergehenden Ansprüche, **dadurch gekennzeichnet, dass** die erste Masseleitung (M1) - in einer Richtung senkrecht zu den Wellenleiterarmen (11, 12) und parallel zu dem Substrat (10) betrachtet - zumindest abschnittsweise auf einer der zweiten Signalleitung (S2) abgewandten Seite der ersten Signalleitung (S1) verläuft.

5. Modulatoranordnung nach einem der vorhergehenden Ansprüche, **dadurch gekennzeichnet, dass** die Signal- und Masseleitungen (S1, S2, M1, M2) - in einer Richtung senkrecht zu den Wellenleiterarmen (11, 12) und parallel zu dem Substrat (10) betrachtet - nebeneinander in der Reihenfolge erste Masseleitung (M1), erste Signalleitung (S1), zweite Signalleitung (S2) und zweite Masseleitung (M2) angeordnet sind.

6. Modulatoranordnung nach einem der vorhergehenden Ansprüche, **dadurch gekennzeichnet, dass** der Treiber (3) einen weiteren Signalausgang (AS2) aufweist, der mit der zweiten Signalleitung (S2) verbunden ist, und/oder der Treiber (3) einen weiteren Masseausgang (AM1) aufweist, der mit der ersten Masseleitung (M1) verbunden ist.

7. Modulatoranordnung nach Anspruch 6, **dadurch gekennzeichnet, dass** die Ausgänge des Treibers (3) nebeneinander in der Reihenfolge erster Masseausgang (AM1), erster Signalausgang (AS1), zweiter Signalausgang (AS2) und zweiter Masseausgang (AM2) angeordnet sind.

8. Modulatoranordnung (100), mit
- einem optischen Dünnfilm-Lithiumniobat-Mach-Zehnder-Modulator (1) mit einem auf einem Substrat (10) angeordneten ersten und einem zweiten Wellenleiterarm (11, 12), wobei
- der erste und der zweite Wellenleiterarm (11, 12) jeweils einen aus Lithiumniobat gebildeten Bereich (111, 121) aufweisen, wobei der aus Lithiumniobat gebildete Bereich (111, 121) mindestens eine Lithiumniobat-Schicht in x-cut-Orientierung aufweist;
- einer Elektrodenanordnung (2) zum Erzeugen eines elektrischen Feldes, das zumindest abschnittsweise auf den ersten und zweiten Wellenleiterarm (11, 12) einwirkt, wobei
- die Elektrodenanordnung (2) eine erste und eine zweite Signalleitung (S1', S2') sowie eine erste und zweite Masseleitung (M1', M2') umfasst, wobei
- der erste Wellenleiterarm (11) - in einer Richtung senkrecht zu den Wellenleiterarmen (11, 12) und parallel zu dem Substrat (10) betrachtet - zwischen der ersten Masseleitung (M1') und der ersten Signalleitung (S1') verläuft, und wobei
- der zweite Wellenleiterarm (12) - in einer Richtung senkrecht zu den Wellenleiterarmen (11, 12) und parallel zu dem Substrat (10) betrachtet - zwischen der zweiten Masseleitung (M2') und der zweiten Signalleitung (S2') verläuft;
- einem differentiellen Treiber (3) zum Erzeugen einer Spannung für den Mach-Zehnder-Modulator (1), wobei der Treiber (3) aufweist:
- einen ersten Signalausgang (AS1'), der mit der ersten Signalleitung (S1') verbunden ist,
- einen zweiten Signalausgang (AS2'), der mit der zweiten Signalleitung (S2') verbunden ist,
- einen ersten Masseausgang (AM1'), der mit der ersten Masseleitung (M1') verbunden ist, und
- einen zweiten Masseausgang (AM2'), der mit der zweiten Masseleitung (M2') verbunden ist.

9. Modulatoranordnung nach Anspruch 8, **dadurch gekennzeichnet, dass** die Signal- und Masseleitungen (S1', S2', M1', M2') - in einer Richtung senkrecht zu den Wellenleiterarmen (11, 12) und parallel zu dem Substrat (10) betrachtet - nebeneinander in der Reihenfolge erste Masseleitung (M1'), erste Signalleitung (S1'), zweite Masseleitung (M2') und zweite Signalleitung (S2') angeordnet sind.

10. Modulatoranordnung nach Anspruch 9, **dadurch gekennzeichnet, dass** die Ausgänge des Treibers (3) nebeneinander in der Reihenfolge erster Masseausgang (AM1'), erster Signalausgang (AS1'), zweiter Masseausgang (AM2') und zweiter Signalausgang (AS2') angeordnet sind.

11. Modulatoranordnung nach einem der vorhergehenden Ansprüche, **dadurch gekennzeichnet, dass** der Mach-Zehnder-Modulator (1) einen mit einem Eingangskoppler (EK) verbundenen Eingangswellenleiter (EW) aufweist.

12. Modulatoranordnung nach einem der vorhergehenden Ansprüche, **dadurch gekennzeichnet, dass** der Eingangswellenleiter (EW) einen mit dem Eingangskoppler (EK) verbundenen ersten Abschnitt (EW1) und einen zweiten Abschnitt (EW2), über den Licht in den Eingangswellenleiter (EW) einkoppelbar ist, umfasst, wobei der Eingangswellenleiter (EW) zwischen dem ersten und dem zweiten Abschnitt (EW1, EW2) eine Krümmung (K) aufweist.

13. Modulatoranordnung nach Anspruch 12, **dadurch gekennzeichnet, dass** der Mach-Zehnder-Modulator (1) mindestens einen mit den beiden Wellenleiterarmen (11, 12) verbundenen Ausgangskoppler (AK) umfasst, wobei sich der zweite Abschnitt (EW2) des Eingangswellenleiters (EW) zumindest teilweise auf einer den Wellenleiterarmen (11, 12) abgewandten Seite des Ausgangskopplers (AK) befindet.

14. Modulatoranordnung nach einem der vorhergehenden Ansprüche, **dadurch gekennzeichnet, dass** der Treiber (3) ausgebildet ist, die ersten und die zweite Signalleitung (S1, S2) mit gegenläufigen Signalen zu beaufschlagen.

15. Modulatoranordnung nach einem der vorhergehenden Ansprüche, **dadurch gekennzeichnet, dass** der Treiber (3) zwei Signalausgänge (AS1, AS2, AS1', AS2') aufweist, über die der Treiber (3) jeweils eine Wechselspannung bereitstellt, wobei die bereitgestellten Wechselspannungen entgegengesetzte Polarität besitzen.
